(19) Europäisches Patentamt
European Patent Office
Office européen des brevets

(11) Numéro de publication : **0 079 814**
**B1**

(12) **FASCICULE DE BREVET EUROPÉEN**

(45) Date de publication du fascicule du brevet : **30.12.86**

(21) Numéro de dépôt : **82401995.4**

(22) Date de dépôt : **28.10.82**

(51) Int. Cl.[4] : **C 08 F299/02**, C 08 F291/00// C09D3/727 ,(C08F291/00, 218:00)

(54) **Nouvelle composition polymérisable à base d'une résine organique et d'un diluant réactif dont une partie au moins est un carbonate vinylique.**

(30) Priorité : **13.11.81 FR 8121284**

(43) Date de publication de la demande : **25.05.83 Bulletin 83/21**

(45) Mention de la délivrance du brevet : **30.12.86 Bulletin 86/52**

(84) Etats contractants désignés : **BE CH DE FR GB IT LI LU NL SE**

(56) Documents cités :
**PATENTS ABSTRACTS OF JAPAN, vol.5, no. 75(C-55)[747], 19 mai 1981.**
**CHEMICAL ABSTRACTS, vol. 88, no. 8, 29 février 1978, page 68, no. 52066n, Columbus Ohio (USA)**

(73) Titulaire : **SOCIETE NATIONALE DES POUDRES ET EXPLOSIFS**
**12, quai Henri IV**
**F-75181 Paris Cedex 04 (FR)**

(72) Inventeur : **Le Roy, Patrice**
**3, avenue Foch**
**F-91760 Itteville (FR)**
Inventeur : **Perinneau, Sabine**
**5, rue du Docteur Lannelongue**
**F-92120 Montrouge (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 079 814 B1

**Description**

L'invention a pour objet de nouvelles compositions utiles, notamment, dans la technique des revêtements et qui sont constituées d'une résine organique durcissable par polymérisation des doubles liaisons éthyléniques et d'un système diluant réactif.

On entend ici par résine durcissable par polymérisation des doubles liaisons éthyléniques les résines qui présentent de manière générale au moins un groupe

$$-\underset{|}{C} = CH_2$$

terminal ou pendant et interne et qui réticulent par l'intermédiaire de ces groupes par des moyens appropriés. Bien que l'on revienne plus particulièrement sur certains de ces moyens au cours de la description, signalons qu'ils peuvent être aussi divers que le chauffage en présence ou non de promoteurs radicalaires ou par le rayonnement actinique en présence de photoinitiateurs ou par faisceau d'électrons.

Dans le cas, notamment, des compositions de revêtement, il est nécessaire d'associer la résine durcissable à un système diluant réactif qui permet dans un premier temps d'ajuster la fluidité et dans un second temps participe à la réticulation de la résine et permet d'obtenir les propriétés mécaniques désirées.

Ces diluants réactifs comportent une ou plusieurs insaturations qui réagissent avec les doubles liaisons de la résine.

D'innombrables systèmes diluants réactifs ont déjà été décrits dans la littérature et ce n'est pas l'objet de ce texte que de tous les répertorier. On trouvera dans les brevets français 2 327 268 et 2 221 332 des listes non exhaustives des diluants réactifs utilisés actuellement et par le passé.

Ces diluants réactifs peuvent être divisés en deux groupes qui présentent chacun des avantages et des inconvénients : les monomères vinyliques et les monomères acryliques.

L'intérêt des monomères vinyliques comme la N-vinyl-pyrolidone ou le styrène réside principalement dans le fait que leurs doubles liaisons riches en électrons, s'associent avec les doubles liaisons pauvres en électrons de la résine lorsque celle-ci a ses groupements

$$CH_2 = \underset{|}{C}-$$

liés à des groupements électrons attracteurs ce qui est le plus souvent le cas. Cela donne un mélange très réactif et conduit à une alternance oligomères-diluant dans le polymère.

Cependant, ces monomères présentent certains inconvénients :

— toxicité dans la plupart des cas

— volatilité.

De plus, dans le cas de la N-vinyl-Pyrrolidone qui est le solvant vinylique le plus utilisé actuellement, il se produit une forte reprise en eau en atmosphère humide et, de ce fait, une modification des propriétés mécaniques.

Les matériaux réticulés avec les monomères acryliques présentent une faible reprise en eau et peu de modifications au niveau de la dureté en atmosphère humide. Par contre, du fait de la nature de la double liaison, la copolymérisation avec les résines à terminaisons acryliques ne présente pas la même réactivité que pour les monomères vinyliques. On peut citer comme diluant typique le diacrylate d'hexane-1,6 diol.

L'invention propose de nouveaux diluants réactifs pour résines durcissables par polymérisation des insaturations éthyléniques présentant les avantages suivants :

— faible volatilité,

— grande vitesse de réactions, équivalente aux monomères vinyliques,

— faible reprise en eau des matériaux réticulés avec ces diluants,

— grande stabilité mécanique des matériaux réticulés en atmosphère humide,

— faible toxicité.

Il a, en effet, été trouvé que la sélection d'une famille particulière de produits chimiques connus en soi permettait de combiner les avantages présentés par les diluants vinyliques et acryliques et en éliminait les inconvénients.

Selon l'invention la composition utile, notamment, dans la technique des revêtements est constituée :

A. d'une résine durcissable par polymérisation des doubles liaisons

$$-\underset{|}{C} = CH_2$$

B. d'un système diluant réactif dont une partie au moins est un carbonate vinylique répondant à la formule générale suivante :

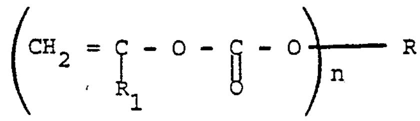

dans laquelle

$R_1$ représente un atome d'hydrogène ou un groupe alkyle inférieur de $C_1$ à $C_4$

R est choisi parmi les groupes alkyle, alkyloxyalkylène, alkylène, mono-, di-, tri-alkylèneoxyalkylène, arylène, arylèneoxyarylène, aryle,

n = 1 ou 2 ou 3 selon la signification des groupes R.

Généralement, l'invention concerne les résines dont les insaturations réactives sont couplées à des groupements électrons attracteurs qui accroissent leur réactivité. Elles peuvent posséder une ou plusieurs insaturations, de préférence 0,2 à 5 équivalents d'insaturations pour 1 000 grammes et avantageusement 0,4 à 2 équivalents pour 1 000 grammes.

Toutes ces résines sont connues ou accessibles au moyen des connaissances normales de l'homme de métier.

Plus précisément, les résines qui conviennent pour l'invention comprennent les résines polyesteracryliques, polyétheracryliques, polycarbonateacryliques qui sont obtenues par réaction de l'acide acrylique ou méthacrylique sur un polyol et les résines insaturées modifiées par de l'uréthane dont la structure va être développée plus en détail vu qu'elles présentent des propriétés avantageuses. La structure commune à toutes ces résines insaturées modifiées par de l'uréthane résultent de la liaison d'un polyol (diol y compris) avec un ester ou éther insaturé ayant un hydrogène actif par l'intermédiaire d'un polyisocyanate aliphatique ou aromatique.

Ces résines peuvent être obtenues par plusieurs procédés connus. On peut, par exemple, faire réagir le polyol avec un diisocyanate afin d'obtenir un prépolymère sans extension de chaine. Cette réaction peut être effectuée dans le diluant réactif copolymérisable. Puis l'ester ou l'éther insaturé ayant un hydrogène actif est ajouté de manière connue.

A titre d'exemple d'éther ou d'ester insaturé ayant un hydrogène actif, on peut citer l'alcool bêta-allyloxy-éthylique ($HO—CH_2—CH_2—O—CH_2—CH = CH_2$) l'alcool bêta-vinyloxy-éthylique, les hydroxyalkylacrylates ou méthacrylates et, notamment, l'hydroxy-2 éthylacrylate ou méthacrylate. On peut également utiliser des mélanges de ces composés.

Pour des raisons de réactivité on préférera les esters aux éthers insaturés.

Parmi les polyisocyanates convenables, on peut citer, à titre indicatif les composés suivants :

les 2,4 et 2,6-diisocyanato-toluène, les 2,4 et 2,6 diisocyanato-méthyl-1 cyclohexane, le 4,4'-diisocyanato-dicyclohexylméthane, le diisocyanato-isophorone, le diisocyanate d'hexaméthylène, le diisocyanato-2,2,4-triméthylhexaméthylène, les biurets à base, par exemple, de diisocyanate d'hexaméthylène, ainsi que leur mélange.

Parmi les polyols qui conviennent pour la présente invention on peut citer :

— les polycarbonates hydroxytéléchéliques obtenus par phosgénation ou transestérification de diols ou triols aliphatiques, cycloaliphatiques ou aromatiques seuls ou en mélange,

— les polyesters hydroxytéléchéliques obtenus par réaction d'un polyol (tel qu'éthylèneglycol, diéthylèneglycol, glycérol, butane diol-1,3, bisphénol A propoxylé, sorbitol, etc...) sur un acide polycarboxylique ou son anhydride ou son ester (tel que l'acide adipique, l'anhydride maléique, succinique ou téréphtalique),

— les polyétherpolyols obtenus par addition d'un oxyde d'alkylène (tel qu'oxyde d'éthylène, l'oxyde de propylène, le tétrahydrofuranne) sur un polyol tel qu'indiqué ci-dessus,

— les polyéthers esters tels que l'adipate de polydiéthylèneglycol et l'adipate de polytriéthylèneglycol dans lesquels le polyéther remplace une partie du glycol,

— les polyuréthannes hydroxytéléchéliques formés à partir de polyols tels qu'indiqués plus haut et de polyisocyanate indiqués plus haut,

— les polyépoxydes formés à partir de polyols comme le bis-phénol A et d'épichlorhydrine.

Pour des raisons de mise en œuvre il est préférable de choisir des résines linéaires comme celles décrites dans les brevets français 2 431 514 et 1 513 285.

Il est également préférable que ces résines aient un poids moléculaire compris entre 600 et 10 000.

Les carbonates vinyliques selon l'invention peuvent être obtenus, par exemple, par action du chloroformiate de vinyle sur un alcool selon la réaction :

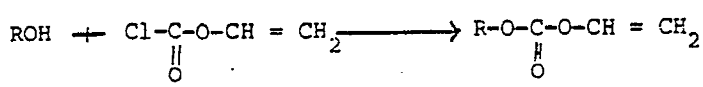

Selon la nature des groupements hydroxylés, on pourra obtenir les carbonates vinyliques correspon-

dants désirés. Ainsi, avec un alkylèneglycol on obtient le carbonate de vinyle et d'alkylèneglycol.

Il est également possible d'obtenir d'autres carbonates vinyliques en utilisant des chloroformiates substitués en α.

Pour que le diluant réactif remplisse sa fonction première qui est d'ajuster la viscosité de la composition à mettre en œuvre, il est nécessaire qu'il ne dépasse pas un certain poids moléculaire.

Bien qu'il soit possible d'utiliser des carbonates de vinyle ayant jusqu'à trois groupements vinyliques il est préférable que deux groupements vinyliques soient présents seulement.

En effet, cela réalise un compromis entre les carbonates vinyliques et d'alkyle qui sont volatils et les carbonates vinyliques comportant trois groupements vinyliques qui présentent une viscosité élevée et qui de plus conduisent à des matériaux durs et fragiles.

Les carbonates de vinyle et de mono-, di-, ou tri-alkylène glycol sont les diluants réactifs préférés de l'invention. Parmi ceux-ci le carbonate de vinyle et de diéthylèneglycol s'est révélé particulièrement intéressant.

Les proportions des deux constituants de la composition de l'invention peuvent varier selon les propriétés mécaniques souhaitées du matériau réticulé.

Bien qu'il soit possible d'utiliser un carbonate vinylique à titre de seul diluant réactif il est avantageux de l'utiliser en mélange avec un diluant réactif acrylique.

Pour 100 parties en poids de composition, la proportion des différents constituants sera comprise dans les limites suivantes :

| | |
|---|---|
| Résine A | 40 à 95 |
| Diluants réactifs | 60 à 5 |
| et de préférence | |
| Résine A | 50 à 80 |
| Diluants réactifs | 50 à 20 |

L'invention a également pour objet l'application de ces compositions à l'obtention de films polymérisés utiles, notamment, comme revêtement de supports aussi divers que le bois, le papier, le métal ou le plastique.

Ces compositions sont réticulées à l'aide de catalyseurs appropriés. On peut citer notamment :

— polymérisation thermique ou par haute fréquence, en présence ou non de promoteurs radicalaires (peroxydes, hydroperoxydes ou promoteurs de type azo) aux températures usuelles de polymérisation, de préférence, cependant, entre 50 et 170 °C. A titre d'exemples non limitatifs, on peut citer le peroxyde de dicumyle, le peroxyde de tertiobutyle, le peroxyde de benzoyle, le peroxyde de lauroyle, l'hydroperoxyde de cumène, le percarbonate de dicyclohexyle et l'azo bis isobutyronitrile,

— polymérisation par faisceau d'électrons sans amorceurs à température ambiante,

— il est toutefois avantageux d'employer un moyen de polymérisation à température ambiante sous rayonnement ultraviolet, en présence de photoinitiateurs ou de photosensibilisateurs dans les conditions usuelles. A titre d'exemples non limitatifs on peut citer comme photoinitiateurs : les éthers de la benzoïne et les dérivés phénoniques seuls ou en association avec une amine (benzophénone, diéthoxyacétophénone, amine commercialisée par CIBA sous la marque déposée « Irgacure 651 », amine commercialisée par MERCK sous la marque déposée « Darocur 1116 »).

Les matériaux ainsi obtenus présentent une faible reprise en eau et une grande stabilité mécanique en atmosphère humide.

Un mode préféré de réalisation de l'invention consiste à faire passer la composition comprenant le photoinitiateur sous une lampe UV à vitesse désirée.

Ce type de polymérisation est cependant limité aux applications pour lesquelles, d'une part les produits sont peu chargés et d'autre part aux épaisseurs (inférieures à 1 mm et de préférence inférieures à 100 μm).

Les exemples ci-après illustrent l'invention et sont réalisés avec le carbonate de vinyle et de diéthylène glycol.

Afin de mieux illustrer l'amélioration apportée par l'invention des essais comparatifs ont été effectués avec un diluant vinylique, la N-vinyl-pyrrolidone (NVP) et un diluant diacrylique : le diacrylate d'hexanediol (HDODA).

Les essais sont effectués à l'aide d'une résine uréthane diacrylique de poids moléculaire d'environ 1 300 et obtenue à partir de :

— 2 moles d'acrylate d'hydroxy-2 éthyle
— 2 moles d'isophorone diisocyanate
— 1 mole de polyadipate d'éthylèneglycol.

Le catalyseur est l'amine commercialisée par CIBA sous la marque déposée « Irgacure 651 » (I).

Un film d'une faible épaisseur est déposé sur un support que l'on fait ensuite passer sous une lampe UV à une vitesse constante (V) de 3,8 m/min dans un cas et de 1,3 m/min dans l'autre cas.

La dureté Persoz pour chaque composition est mesurée après 1 h et 4 jours.

Les résultats pour chaque formulation, dont les proportions pour les différents constituants sont données en poids, sont indiqués dans le tableau ci-dessous :

1. Résine sans diluant réactif

| Formulation | Vitesse de passage (V) m/min | Dureté Persoz Après 1 h | Dureté Persoz Après 4 j | % augmentation dureté |
|---|---|---|---|---|
| Résine : 100 | 3,8 | 112 | 110 | 0 |
| I : 3 | 1,3 | 114 | 106 | 0 |

2. Résine avec comme diluant réactif le carbonate de vinyle et de diéthylèneglycol (CVD)

| Formulation | Vitesse de passage (V) m/min | Dureté Persoz Après 1 h | Dureté Persoz Après 4 j | % augmentation dureté |
|---|---|---|---|---|
| Résine : 90<br>CVD : 10<br>I : 3 | 3,8<br>1,3 | 97<br>129 | 142<br>128 | 46<br>0 |
| Résine : 80<br>CVD : 20<br>I : 3 | 3,8<br>1,3 | 92<br>145 | 168<br>189 | 82<br>30 |
| Résine : 70<br>CVD : 30<br>I : 3 | 3,8<br>1,3 | 103<br>147 | 223<br>223 | 116<br>52 |

3. Résine avec comme diluant réactif la N-vinyl-pyrrolidone (NVP)

| Formulation | Vitesse de passage (V) m/min | Dureté Persoz Après 1 h | Dureté Persoz Après 4 j | % augmentation dureté |
|---|---|---|---|---|
| Résine : 90<br>NVP : 10<br>I : 3 | 3,8<br>1,3 | 169<br>170 | 155<br>158 | 0<br>0 |
| Résine : 80<br>NVP : 20<br>I : 3 | 3,8<br>1,3 | 188<br>193 | 184<br>185 | 0<br>0 |
| Résine : 70<br>NVP : 30<br>I : 3 | 3,8<br>1,3 | 101<br>166 | 218<br>190 | 116<br>15 |

4. Résine avec comme diluant réactif le diacrylate d'hexanediol (HDODA)

| Formulation | Vitesse de passage (V) m/min | Dureté Persoz Après 1 h | Dureté Persoz Après 4 j | % augmentation dureté |
|---|---|---|---|---|
| Résine : 80<br>HDODA : 20<br>I : 3 | 3,8<br>1,3 | 114<br>149 | 135<br>162 | 18<br>9 |
| Résine : 70<br>HDODA : 30<br>I : 3 | 3,8<br>1,3 | 120<br>147 | 152<br>174 | 27<br>18 |

Des essais concernant la reprise d'eau de ces revêtements en atmosphère humide ont également été effectués avec des formulations comportant 85 parties de résine, 15 parties de diluant réactif et 3 parties de l'amine (I).

Après séchage une nuit en dessicateur, ces films ont été mis en enceinte climatique à 20 °C et 50 % d'humidité relative. Un autre essai a été effectué à 20 °C et 90 % d'humidité relative.

Les films ont été sortis de l'enceinte à intervalles réguliers pour mesurer la dureté Persoz et la reprise de poids.

5. Films conservés à 20 °C et 50 % d'humidité relative

Résine + CVD :

| | | | |
|---|---|---|---|
| retirés après | 1 h | 5 h | 23 h |
| Dureté Persoz | 95 | 125 | 125 |
| Augmentation en poids en % | 0,50 | 0,51 | 0,55 |

Résine + NVP :

| | | | |
|---|---|---|---|
| retirés après | 1 h | 5 h | 23 h |
| Dureté Persoz | 220 | 210 | 220 |
| Augmentation en poids en % | 0,80 | 0,82 | 0,85 |

Résine + HDODA :

| | | | |
|---|---|---|---|
| retirés après | 1 h | 5 h | 23 h |
| Dureté Persoz | 85 | 90 | 110 |
| Augmentation en poids en % | 0,50 | 0,50 | 0,50 |

6. Films conservés à 90 % d'humidité relative

Résine + CVD :

| | | | |
|---|---|---|---|
| retirés après | 1 h | 5 h | 23 h |
| Dureté Persoz | 70 | 70 | 80 |
| Augmentation en poids en % | 1,50 | 1,60 | 1,60 |

Résine + NVP :

| | | | |
|---|---|---|---|
| retirés après | 1 h | 5 h | 23 h |
| Dureté Persoz | 70 | 90 | 95 |
| Augmentation en poids en % | 3,30 | 3,00 | 2,90 |

(Suite)

| | | | |
|---|---|---|---|
| Résine + HDODA : | | | |
| retirés après | 1 h | 5 h | 23 h |
| Dureté Persoz | 50 | 55 | 55 |
| Augmentation en poids en % | 1,80 | 1,70 | 1,60 |

On a réalisé des essais similaires avec une résine diacrylique ayant un squelette polycarbonate d'éthylène et de butylène glycol de P.M = 890. Le taux d'insaturation de la résine en équivalent par 1 000 grammes est de 1,36.

A - Composition (en poids)

| | |
|---|---|
| résine | 72 |
| CVD | 14 |
| Tétraéthylène glycol diacrylate | 14 |
| Phénothiazine | 0,0075 |
| Amine commercialisée par MERCK sous la marque déposée « Darocur 1116 » | 4 |

B - Composition comparative (ne faisant pas partie de l'invention)

Idem, mis à part le fait que le CVD est remplacé par la NVP.

7. Films conservés à 20 °C et 50 % d'humidité relative

| | | | | | |
|---|---|---|---|---|---|
| | retirés après | 0 | 1/2 h | 1 h | 2 h |
| | Dureté Persoz | 80 | 67 | 55 | 50 |
| A | Augmentation en poids en % | - | 0,50 | 0,62 | 0,88 |
| | Dureté Persoz | 98 | 85 | 85 | 85 |
| B | Augmentation en poids en % | - | 0,79 | 1,10 | 1,51 |

8. Films conservés à 20 °C à 90 % d'humidité relative

| | | | | | |
|---|---|---|---|---|---|
| | retirés après | 0 | 1/2 h | 1 h | 2 h |
| | Dureté Persoz | - | 41 | 37 | 33 |
| A - | Augmentation en poids en % | - | 1,82 | 2,06 | 2,41 |
| | Dureté Persoz | - | 50 | 48 | 43 |
| B - | Augmentation en poids en % | - | 3,73 | 3,98 | 4,87 |

**Revendications**

1. Composition utile, notamment, pour l'obtention de revêtement constituée :
A. d'une résine durcissable par polymérisation de doubles liaisons

$$-\underset{|}{C}=CH_2$$

B. d'un système diluant réactif dont une partie au moins est un carbonate vinylique répondant à la formule générale suivante :

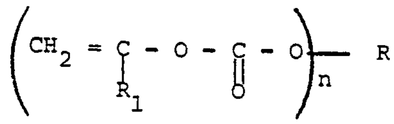

dans laquelle

— $R_1$ représente un atome d'hydrogène ou un groupe alkyle inférieur de $C_1$ à $C_4$,

— R est choisi parmi les groupes alkyle, alkyloxyalkylène, alkylène, mono-, di-, tri-alkylèneoxyalkylène, arylène, arylèneoxyarylène, aryle,

— n = 1 ou 2 ou 3 selon la signification des groupes R.

2. Composition selon la revendication 1 caractérisée en ce que la résine A comporte 0,2 à 5 et de préférence 0,4 à 2 équivalents insaturations pour 1 000 grammes.

3. Composition selon la revendication 2 caractérisée en ce que la résine A est linéaire.

4. Composition selon l'une des revendications 1 à 3 caractérisée en ce que n est égal à deux.

5. Composition selon la revendication 4 caractérisée en ce que R est choisi parmi les groupements mono-, di-, tri-alkylèneoxyalkylène.

6. Composition selon l'une des revendications précédentes caractérisée en ce que ladite composition répond aux proportions préférées suivantes en poids :

| | |
|---|---|
| Résine A | 50 à 80 |
| Diluant réactif | 50 à 20 |

7. Application des compositions selon l'une des revendications précédentes à la réalisation de revêtement de supports caractérisée en ce que ladite composition contient en outre un catalyseur de réticulation.

8. Application selon la revendication 7 caractérisée en ce que le catalyseur est un photoinitiateur.

**Claims**

1. Composition useful, in particular, for obtaining coatings constituted :

A. of a resin hardenable by polymerisation of double bonds

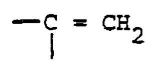

B. of a reactive diluent system of which at least part is a vinyl carbonate corresponding to the following general formula :

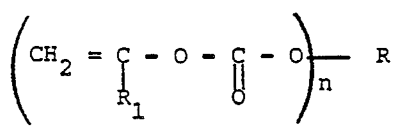

in which

— $R_1$ represents a hydrogen atom or a lower $C_1$ to $C_4$ alkyl group,

— R is selected from alkyl, alkyloxyalkylene, alkylene, mono-, di- or tri-alkyleneoxyalkylene, arylene, aryleneoxyarylene or aryl groups,

— n = 1 or 2 or 3 according to the meaning of the R groups.

2. Composition according to Claim 1 characterised in that the resin A comprises 0.2 to 5 preferably 0.4 to 2 unsaturation equivalents per 1 000 grams.

3. Composition according to Claim 2 characterised in that the resin A is linear.

4. Composition according to one of Claims 1 to 3 characterised in that n is equal to two.

5. Composition according to Claim 4 characterised in that R is selected from the groups mono-, di-, tri-alkyleneoxyalkylene.

6. Composition according to one of the preceding claims characterised in that said composition corresponds to the following preferred proportions by weight :

| | |
|---|---|
| Resin A | 50 to 80 |
| Reactive diluent | 50 to 20 |

7. Application of compositions according to one of the preceding claims in the production of coatings for supports characterised in that said composition additionally contains a cross-linking catalyst.

8. Application according to Claim 7 characterised in that the catalyst is a photoinitiator.

**Patentansprüche**

1. Zusammensetzung, insbesondere für die Herstellung von Überzügen, aus

A. einem durch Polymerisation von

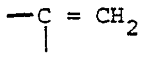

Doppelbindungen härtbaren Harz,

B. einem reaktiven Verdünnungsmittel, von dem zumindest ein Teil ein Vinylcarbonat der folgenden allgemeinen Formel ist :

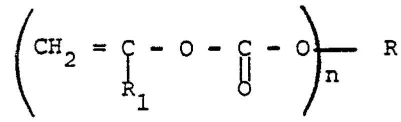

in der

— $R_1$ ein Wasserstoffatom oder eine niedrige Alkylgruppe mit 1 bis 4 Kohlenstoffatomen ist,

— R unter Alkyl, Alkyloxyalkylen, Alkylen, Mono-, Di- oder Trialkylenoxyalkylen, Arylen, Arylenoxyarylen und Aryl ausgewählt wird,

— n 1 oder 2 oder 3 ist, je nach Bedeutung von R.

2. Zusammensetzung nach Anspruch 1, dadurch gekennzeichnet, daß das Harz A 0,2 bis 5 und vorzugsweise 0,4 bis 2 Äquivalente ungesättigte Bindungen je 1 000 g enthält.

3. Zusammensetzung nach Anspruch 2, dadurch gekennzeichnet, daß das Harz A geradkettig ist.

4. Zusammensetzung nach einem der Ansprüche 1 bis 3, dadurch gekennzeichnet, daß n 2 ist.

5. Zusammensetzung nach Anspruch 4, dadurch gekennzeichnet, daß R unter Mono-, Di- und Trialkylenoxyalkylen ausgewählt wird.

6. Zusammensetzung nach einem der vorhergehenden Ansprüche, dadurch gekennzeichnet, daß sie folgende bevorzugte Gewichtsanteile aufweist :

| | |
|---|---|
| Harz A | 50 bis 80 |
| reaktives Verdünnungsmittel | 50 bis 20 |

7. Verwendung der Zusammensetzungen nach einem der vorhergehenden Ansprüche zur Herstellung von Trägerüberzügen, dadurch gekennzeichnet, daß die Zusammensetzung außerdem einen Vernetzungskatalysator enthält.

8. Verwendung nach Anspruch 7, dadurch gekennzeichnet, daß der Katalysator ein Fotoinitiator ist.